# EUROPÄISCHE PATENTANMELDUNG

(11) **EP 1 520 487 A2**
(43) Veröffentlichungstag der Anmeldung: **06.04.2005**
(21) Anmeldenummer: 04015446.0
(22) Anmeldetag: 01.07.2004
(51) Int. Cl.: A23N 1/00

(54) **Abbeermaschine**

(30) Priorität: 16.07.2003 DE 20310936 U
(71) Anmelder: Armbruster, Hermann, 74363 Güglingen (DE)
(72) Erfinder: Armbruster, Hermann, 74363 Güglingen (DE)
(74) Vertreter: Lempert, Jost, Dipl.-Phys. Dr. rer.nat.

(57) **Zusammenfassung**

Bei einer Abbeermaschine (1) mit mindestens einer Stacheln (5) aufweisenden, um ihre Achse in einem Abbeerzylinder (3) drehbaren Abbeerwalze (4) ist letzterer mindestens eine weitere periodische Bewegung aufgeprägt.

## Beschreibung

Die Erfindung betrifft eine Abbeermaschine mit mindestens einer Stacheln aufweisenden, um ihre Achse in einem Abbeerzylinder drehbaren Abbeerwalze.

Bei derartigen Abbeermaschinen durchsetzt in der Regel eine mit schraubenförmig angeordneten, sich radial erstreckenden Stacheln versehene Abbeerwalze einen gelochten Abbeerzylinder. Die Abbeerwalze ist angetrieben; der Lochblech-Abbeerzylinder kann gegensinnig angetrieben sein. Um ein effektives Abbeeren der Traubenbeeren von den Traubenrappen zu erreichen, sind hohe Umdrehungszahlen, insbesondere der Abbeerwalze, erforderlich. Hierdurch erfolgt ein ungenaues Trennen von Beeren und Abbeerwalze; oft bleiben Fruchtfleischbereiche an den Rappen hängen und werden mit diesen aus dem Abbeerzylinder herausbefördert und können daher nicht zur Herstellung des Traubenmostes und aus diesem des Weines genutzt werden. Der Abfall ist damit sehr hoch. Außerdem wird aufgrund der hohen Geschwindigkeiten das Traubengut geschädigt.

Der Erfindung liegt daher die Aufgabe zugrunde, eine bekannte Abbeermaschine dahingehend weiterzuentwickeln, dass ein Abbeeren der Traubenbeeren von den Traubenrappen in schonenderer Weise erfolgen kann.

Zur Lösung der genannten Aufgabe ist eine Abbeermaschine der eingangs genannten Art gekennzeichnet durch mindestens eine weitere der Abbeerwalze aufgeprägte periodische Bewegung.

Die zusätzlich aufgeprägte periodische Bewegung kann zudem derart ausgebildet sein, dass die der Abbeerwalze aufgeprägte periodische Bewegung eine senkrecht zur Achse der Abbeerwalze gerichtete Bewegung ist, wobei entweder die zusätzlich aufgeprägte Bewegung eine Verschwenkbewegung der Abbeerwalze ist oder aber die zusätzlich aufgeprägte Bewegung eine Parallelversatzbewegung der Abbeerwalze ist.

Alternativ oder zusätzlich kann auch eine periodische Axialbewegung der Abbeerwalze vorgesehen sein.

Die konkrete Realisierung einer zusätzlichen periodischen Bewegung senkrecht zur Achse der Abbeerwalze kann in bevorzugter Ausgestaltung dadurch erreicht werden, dass die Abbeerwalze, hier zumindest an einem Ende, mit einem Verschwenkantrieb verbunden ist, wobei insbesondere zumindest ein Ende der Abbeerwalze exzentrisch zu einer im wesentlichen senkrecht zur Achse der Abbeerwalze gerichteten Abtriebswelle des Schwenkantriebs angelenkt ist und vor allem zumindest ein Ende der Abbeerwalze axial gleitend relativ zu einer mit einem Schwenkantrieb verbundenen Welle gelagert ist.

Eine periodische Bewegung in Axialrichtung der Abbeerwalze kann konkret dadurch verwirklicht werden, dass das mit dem Schwenkantrieb verbundene Ende der Abbeerwalze direkt mit dem Schwenkantrieb verbunden ist und ein mit einem Hauptantrieb zur Aufprägung einer Drehbewegung auf die Abbeerwalze verbundenes Ende gleitend an einer Abtriebswelle des Hauptantriebs gelagert ist, wobei zwischen Abtriebswelle des Hauptantriebs und Abbeerwalze in Umfangsrichtung ein Formschluss gegeben ist.

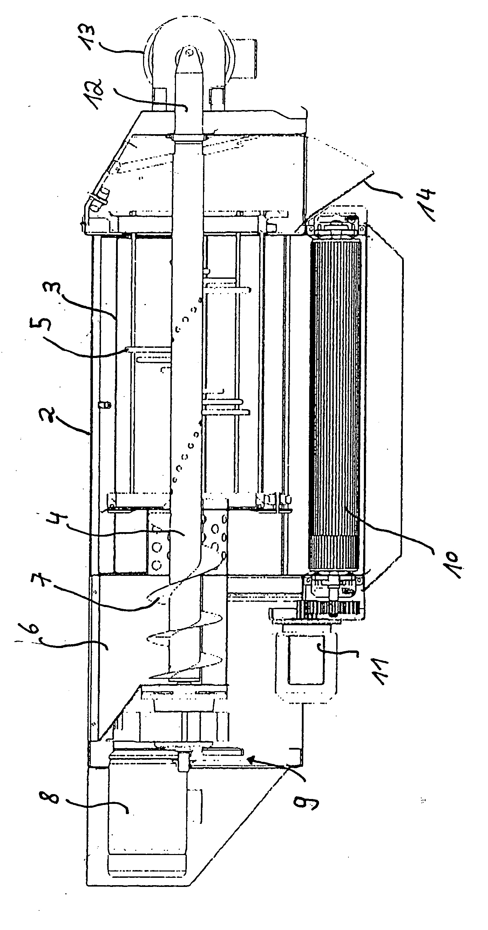

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelen erläutert ist. Dabei zeigt die einzige
- Figur: einen vertikalen Längsschnitt durch eine erfindungsgemäße Abbeermaschine.

Die erfindungsgemäße Abbeermaschine 1 weist ein Gehäuse 2 auf. Innerhalb des Gehäuses 2 ist ein Abbeerzylinder 3 drehbar gelagert.

Durch den Abbeerzylinder 3 erstreckt sich eine Abbeerwalze 4, die im Bereich des Abbeerzylinders 3 mit schraubengangförmig angeordneten Stacheln 5 versehen ist.

Links des Abbeerzylinders 3 befindet sich ein Aufgabetrichter 6, in dessen unteren Teil sich die Abbeerwalze 4 ebenfalls hinein erstreckt. Im Bereich des Aufgabetrichters 6 ist die Abbeerwalze 4 als Förderschnecke mit schraubengangförmigen Schaufeln 7 ausgebildet. Die Abbeerwalze 4 ist am linken Ende drehbar gelagert und wird über einen Hauptmotor 8 und ein diesem nachgeordnetes Getriebe zur Drehung angetrieben.

Abbeerzylinder 3 und Abbeerwalze 4 drehen sich gegensinnig. Der Abbeerzylinder 3 kann über ein Getriebe vom Hauptantrieb 8 mit angetrieben werden.

Unterhalb des Abbeerzylinders 3 ist ein Paar Quetschwalzen 10 angeordnet, welche durch einen zum Hauptantrieb 8 separaten Antrieb 11 angetrieben werden. Die Quetschwalzen 10 können auch über ein geeignetes Getriebe vom Hauptantrieb 8 mitangetrieben werden.

Die Abbeerwalze 4 ragt mit ihrem rechten, verjüngten Ende in eine Hohlwelle 12, wobei Abbeerwalze 4 und Hohlwelle 12 relativ zueinander verschiebbar sind.

Die Abbeerwalze 4 ist an ihrem linken Ende in geringem Umfang angular beweglich gelagert.

Die Hohlwelle 12 ist exzentrisch an einem Schwenkantrieb 13 angelenkt, dessen Achse sich im wesentlichen senkrecht zur Achse der Abbeerwalze 4 erstreckt. Durch die exzentrische Anordnung der Anlenkung der Hohlwelle 12 am Schwenkantrieb 13 wird die Hohlwelle 12 in ihrem Anlenkbereich beim Antrieb des Schwenkantriebs 13 auf einer Kreisbahn bewegt und überträgt damit auf die Abbeerwalze 4 eine zyklische Auf- und Abbewegung dessen rechten, in die Hohlwelle 12 ragenden Endes und damit auf die gesamte Abbeerwalze 4 ein Verschwenken um deren linksseitige Lagerung. Die Bewegungskomponente der Hohlwelle 12 in axialer Richtung der Abbeerwalze 4 wird durch die verschiebliche Lagerung des rechten Endes der Abbeerwalze 4 in der Hohlwelle 12 ausgeglichen.

Zum Betrieb der erfindungsgemäßen Abbeermaschine 1 wird zunächst der Antrieb 8 eingeschaltet. Gleichzeitig oder später können die Antriebe 13 und 11 mitaufgeschaltet werden.

Über den Einfülltrichter 6 wird Traubengut auf den Schnekkenbereich der Abbeerwalze 4 mit den Schaufeln 7 aufgegeben und durch die schraubengangförmig angeordneten Schaufeln 7 in den Abbeerzylinder 3 hineinbefördert. In diesem erfolgt in an sich bekannter Weise aufgrund des Zusammenwirkens der an der Abbeerwalze 4 befindlichen Stacheln 5 mit dem gelochten Abbeerzylinder 3 ein Trennen der Traubenbeeren von den Traubenrappen. Die Traubenbeeren werden durch die Löcher des Abbeerzylinders 3 aus diesem herausbefördert und fallen in den Spalt (nicht dargestellt) zwischen den beiden Quetschwalzen 10 und werden von diesen unter Quetschung nach unten gefördert, wo sie in einen Aufnahmetank oder Bottich fallen (nicht dargestellt). Die Traubenrappen werden durch die schraubengangförmige Anordnung der Abbeerwalze 4 aus dem Abbeerzylinder 3 zum rechten Ende hinausbefördert und werden dort über eine Rutsche 14 entsorgt.

Durch die der Abbeerwalze 4 mittels des Schwenkantriebs 13 aufgeprägte Verschwenkbewegung wird eine Auflockerung des Traubengutes erreicht, wodurch ohne Reduzierung des Wirkungsgrades und/oder des Durchlasses eine Reduzierung der Drehzahl insbesondere der Abbeerwalze 4, aber auch des Abbeerzylinders 3, erreicht werden kann und damit eine schonendere Behandlung des Beerengutes beim Trennen derselben von den Traubenrappen erreicht wird.

Statt lediglich der Aufprägung einer Verschwenkbewegung senkrecht zur Achse der Abbeerwalze 4 kann auch ein periodischer radialer Parallelversatz der gesamten Welle durchgeführt werden. Mit den beiden vorstehend genannten periodischen Bewegungen oder einzeln kann auch eine periodische Bewegung in axialer Richtung der Welle dieser aufgeprägt werden.

## Patentansprüche

1. Abbeermaschine mit mindestens einer Stacheln aufweisenden, um ihre Achse in einem Abbeerzylinder drehbaren Abbeerwalze, **gekennzeichnet durch** mindestens eine weitere der Abbeerwalze aufgeprägte periodische Bewegung.

2. Abbeermaschine nach Anspruch 1, **dadurch gekennzeichnet, dass** die der Abbeerwalze aufgeprägte periodische Bewegung eine senkrecht zur Achse der Abbeerwalze gerichtete Bewegung ist.

3. Abbeermaschine nach Anspruch 2, **dadurch gekennzeichnet, dass** die zusätzlich aufgeprägte Bewegung eine Verschwenkbewegung der Abbeerwalze ist.

4. Abbeermaschine nach Anspruch 2, **dadurch gekennzeichnet, dass** die zusätzlich aufgeprägte Bewegung eine Parallelversatzbewegung der Abbeerwalze ist.

5. Abbeermaschine nach einem der vorangehenden Ansprüche, **gekennzeichnet durch** eine periodische Axialbewegung der Abbeerwalze.

6. Abbeermaschine nach einem der vorangehenden Ansprüche, **dadurch gekennzeichnet, dass** die Abbeerwalze, zumindest an einem Ende, mit einem Verschwenkantrieb (13) verbunden ist.

7. Abbeermaschine nach Anspruch 6, **dadurch gekennzeichnet, dass** zumindest ein Ende der Abbeerwalze exzentrisch zu einer im wesentlichen senkrecht zur Achse der Abbeerwalze gerichteten Abtriebswelle des Schwenkantriebs (13) angelenkt ist.

8. Abbeermaschine nach einem der vorangehenden Ansprüche, **dadurch gekennzeichnet, dass** zumindest ein Ende der Abbeerwalze (4) axial gleitend relativ zu einer mit einem Schwenkantrieb (13) verbundenen Welle gelagert ist.

9. Abbeermaschine nach Anspruch 7, **dadurch gekennzeichnet, dass** das mit dem Schwenkantrieb (13) verbundene Ende der Abbeerwalze (4) direkt mit dem Schwenkantrieb verbunden ist und ein mit einem Hauptantrieb (8) zur Aufprägung einer Drehbewegung auf die Abbeerwalze (4) verbundenes Ende gleitend an einer Abtriebswelle des Hauptantriebs (8) gelagert ist, wobei zwischen Abtriebswelle des Hauptantriebs (8) und Abbeerwalze (4) in Umfangsrichtung ein Formschluss gegeben ist.

10. Verfahren zum Abbeeren von Beerentrauben mittels einer Abbeermaschine mit mindestens einer Stachel aufweisenden, um ihre Achse in einem Abbeerzylinder drehbaren Abbeerwalze, **dadurch gekennzeichnet, dass** der Abbeerwalze zusätzlich eine periodische Bewegung ausgeprägt wird.
